Europäisches Patentamt

European Patent Office

Office européen des brevets

(11) Veröffentlichungsnummer: **0 164 081**
**B1**

(12) **EUROPÄISCHE PATENTSCHRIFT**

(45) Veröffentlichungstag der Patentschrift:
04.01.89

(21) Anmeldenummer: 85106722.3

(22) Anmeldetag: 31.05.85

(51) Int. Cl.⁴: **F 16 F  13/00,** B 60 K  5/12,
F 16 F  7/10

(54) Zweikammer-Motorlager mit hydraulischer Dämpfung.

(30) Priorität: 07.06.84  DE 3421119

(43) Veröffentlichungstag der Anmeldung:
11.12.85 Patentblatt 85/50

(45) Bekanntmachung des Hinweises auf die Patenterteilung:
04.01.89 Patentblatt 89/1

(84) Benannte Vertragsstaaten:
DE FR GB IT SE

(56) Entgegenhaltungen:
EP-A-0 027 751
EP-A-0 063 662
EP-A-0 110 197
EP-A-0 115 417
DE-A-3 140 783
DE-A-3 245 653

(73) Patentinhaber: **METZELER Gesellschaft mit
beschränkter Haftung, Gneisenaustrasse 15,
D-8000 München 50 (DE)**

(72) Erfinder: **Andrä, Rainer, Dr., Dehmerstrasse 10,
D-6250 Limburg 5 (DE)**
Erfinder: **Hofmann, Manfred, Gerhard v. Dietz-
Strasse 15, D-6257 Hünfelden (DE)**

(74) Vertreter: **Michelis, Theodor, Dipl.- Ing.,
Gneisenaustrasse 15, D-8000 München 50 (DE)**

EP 0 164 081 B1

**Beschreibung**

Die Erfindung betrifft ein Zweikammer-Motorlager mit hydraulischer Dämpfung, insbesondere für Kraftfahrzeuge, dessen flüssigkeitsgefüllte und gummielastische Umfangswände aufweisenden Kammern über eine eine Zwischenplatte durchsetzende Leitung miteinander in Verbindung stehen und in dessen stirnseitiger Motorlagerplatte eine mit einer Membran abgeschlossene Membrankammer eingelassen ist.

Derartige Motorlager sind aus der DE-A-3 244 295 bekannt. Durch die in die Motorlagerplatte eingesetzte Membran, die zusätzlich noch eine zentrale Tilgermasse aufweisen kann und vom vollen Flüssigkeitsdruck innerhalb der Kammer beaufschlagt ist, wird erreicht, daß bei in das Lager eingeleiteten Schwingungen auch diese Membran in Schwingung gerät, die abhängig ist von Geometrie, Steifigkeit und Masse der Membran. Wenn nun die Membran mit ihrer Tilgermasse in Gegenphase zur Erregung, d. h. zur Flüssigkeitsmasse, in der Lagerkammer schwingt, wird dadurch eine vollständige hydraulische Entkopplung bewirkt, wodurch das akustische Verhalten des Lagers erheblich verbessert wird. Wegen der vorgegebenen kennzeichnenden Werte der Membran tritt die angestrebte Frequenzentkopplung jedoch nur über eine relativ enge Bandbreite auf.

Anstelle der Anordnung der Membran in der Motorlagerplatte ist es aber beispielsweise aus der EP-A-0 027 751 bekannt, diese Membran zentral in der starren Zwischenplatte anzuordnen, wo sie nur am Rande eingespannt ist und sich - ggf. durch Anschläge begrenzt nach oben und unten frei auslenken kann. Hiermit wird die gleiche Wirkung einer schmalbandigen Frequenzentkopplung erreicht, jedoch hat diese Anordnung den Nachteil, daß die Membran stets vom vollen Kammerdruck beaufschlagt ist, so daß ihre Lebensdauer oft ungenügend ist.

Ferner ist die Anordnung einer mit einem Gaskissen ggf. einstellbaren Druckes entlasteten Membran allein in der Zwischenplatte in der nicht vorveröffentlichten EP-A-115 417 vorgeschlagen worden.

Der Erfindung liegt demgegenüber die Aufgabe zugrunde, ein Motorlager der eingangs beschriebenen Art zu schaffen, bei dem einerseits eine breitbandigere Frequenzentkopplung und damit Absenkung der dynamischen Steifigkeit möglich ist, und bei dem anderseits eine Membranbeanspruchung durch den Kammerdruck weitgehend reduziert wird.

Zur Lösung dieser Aufgabe ist ausgehend vom eingangs genannten Stand der Technik erfindungsgemäß vorgesehen, daß die Zwischenplatte eine weitere, zentrale Membrankammer mit einer zur motorseitigen Kammer hin abschließenden Membran aufweist und die Membrankammer mit einem Gas gefüllt ist.

Durch Anordnung einer derartigen zweiten Membran im Wirkungsbereich der motorseitigen Lagerkammer, deren Geometrie und Masse sich im allgemeinen von den Werten der Membran in der Motorlagerplatte unterscheidet, ist eine erheblich breitbandigere Frequenzentkopplung möglich. Darüber hinaus ist durch die Anordnung einer Membrankammer hinter der Membran in der Zwischenplatte mit einem gewissen Gas-Gegendruck erreicht, daß die Membran selbst druckentlastet ist, so daß Lebensdauer-Probleme nicht mehr zu befürchten sind.

Zur konstruktiven Ausgestaltung ist es zweckmäßig, daß die Zwischenplatte auf ihrer Oberseite eine zylindrische Ausnehmung aufweist, deren offene Seite mit der mit dem Rand der Ausnehmung abdichtend verbundenen Membran abgeschlossen ist. Dabei kann diese Membran an ihrem Außenumfang einen anvulkanisierten zylindrischen Metallring aufweisen, der als Spannring in die zylindrische Ausnehmung der Zwischenplatte eingesetzt ist und damit die Membran abdichtend verspannt.

Eine weitere konstruktive Möglichkeit besteht darin, daß die Membrankammer im Bereich der Zwischenplatte auf der Oberseite von der Membran seitlich von einem mit der Membran einstückig ausgebildeten, angenähert hohlzylindrischen und nach unten angesetzten Ring, und auf der Unterseite von einem in den hohlzylindrischen Ring eingesetzten topfförmigen Bodenteil aus starrem Material begrenzt ist, und daß der Ring auf seiner Außenseite an einem die Verbindungsleitung zwischen den beiden Kammern aufnehmenden ringförmigen Zwischenplattenteil anliegt. Dieser hohlzylindrische Ring ist auf seiner Außenseite zweckmäßigerweise mit einem im Querschnitt angenähert U-förmigen, metallischen Ring verbunden, dessen freie, nach außen ragende Schenkel das ringförmige Zwischenplattenteil mit den nach innen offenen Nuten der Verbindungsleitung abdichtend umschließen.

Zweckmäßigerweise weist die zusätzliche Membran ebenfalls eine zentrale Tilgermasse auf.

Anhand einer schematischen Zeichnung sind Aufbau und Wirkungsweise von Ausführungsbeispielen nach der Erfindung näher erläutert. Dabei zeigen:

Fig. 1   einen Längsschnitt durch ein Zweikammer-Motorlager mit einer in die Zwischenplatte eingesenkten Membrankammer und

Fig. 2   einen Längsschnitt durch eine weitere Ausführungsform eines Motorlagers mit einer aus dem Membranmaterial selbst gebildeten Membrankammer.

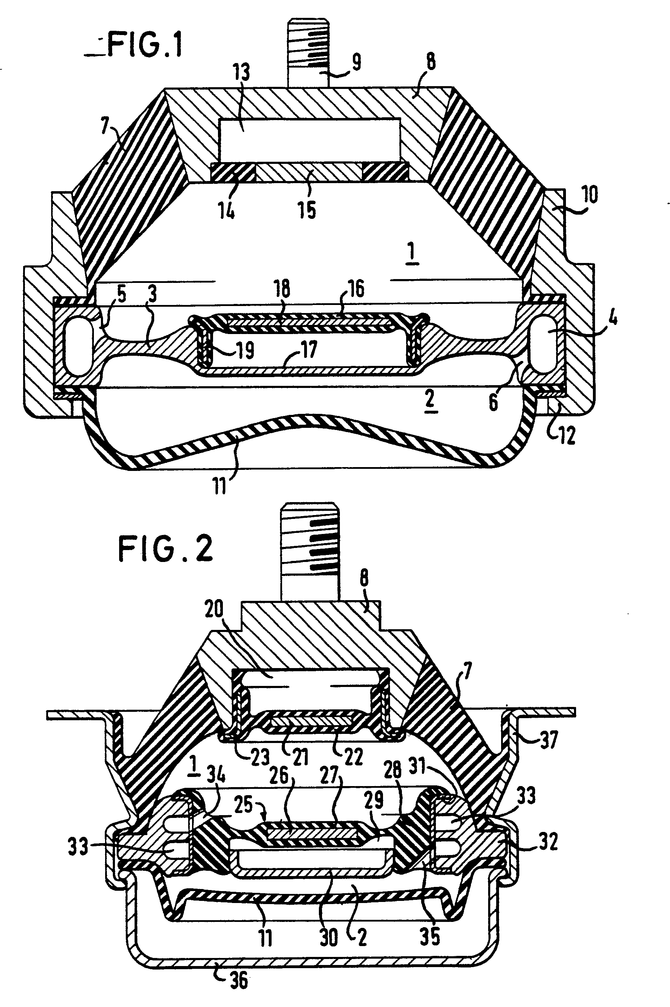

Wie aus Fig. 1 zu ersehen ist, besteht das Zweikammer-Motorlager im wesentlichen aus einer oberen motorseitigen Kammer 1 und einer unteren Kammer 2, die mit einer hydraulischen Flüssigkeit gefüllt sind und über einen am äußeren Umfang der Zwischenplatte 3 verlaufenden Ringkanal 4 mit einer Durchtrittsöffnung 5 zur oberen Kammer 1 und einer Durchtrittsöffnung 6 zur unteren Kammer 2 in Verbindung stehen. Die obere Kammer 1 wird von einer starkwandigen, hohlkegelförmigen Kammerwandung 7 aus gummielastischem Material gebildet, die an der oberen Stirnseite von der Motorlagerplatte 8 mit einem aufgesetzten Gewindebolzen 9 abgeschlossen und am unteren Außenumfang mit dem ringförmigen Widerlager 10 haftend verbunden ist. Die untere Kammer 2 wird von einer beispielsweise tassenförmigen Kammerwandung 11 aus ebenfalls gummielastischem Material gebildet, die vom unteren umgebördelten Ende 12 des Widerlagers 10 gegen die Zwischenplatte 3 abdichtend verspannt ist. Auf der Unterseite der Motorlagerplatte 8 ist ferner ein zylindrischer Hohlraum 13 eingelassen, der zur oberen Kammer 1 durch eine kreisringförmige Gummimembran 14 mit einer zentralen Tilgermasse 15 abgeschlossen ist. Dieser als Membrankammer wirkende Hohlraum 13 ist nach außen abgeschlossen und mit einem Gas oder einer Flüssigkeit geringer Dichte gefüllt. Der Druck in dieser Membrankammer 13 kann dabei dem Atmosphärendruck entsprechen oder aber für eine entsprechende Dämpfungsanpassung auch mit Überdruck beaufschlagt sein.

Zur Anordnung einer weiteren Membran 16 ist in die Oberseite des verdickten Mittelteils der Zwischenplatte 3 eine zylindrische Ausnehmung 17 eingelassen, deren offene Seite mit der Membran 16, die ebenfalls eine Tilgermasse 18 aufweisen kann, abgeschlossen. Diese Membran 16 weist dabei an ihrem Außenumfang einen anvulkanisierten zylindrischen Metallring 19 auf, der am membranseitigen Ende nach außen umgebördelt sein kann, und als Spann- und Haltering in die zylindrische Ausnehmung 17 der Zwischenplatte 3 eingesetzt ist und damit die Membran 16 abdichtend in der Zwischenplatte 3 hält.

Bekanntlich tritt bei derartigen Lagern eine wesentliche Dämpfung nur bei niedrigen Frequenzen bis etwa 30 Hz und größeren Amplituden auf, wenn nämlich ein Flüssigkeitsaustausch über den Ringkanal 4 zwischen den beiden Kammern 1 und 2 stattfindet. Im hochfrequenten Bereich über 30 Hz ist die Dämpfung nur gering, wobei in diesem Bereich die Forderung nach einer optimalen Körperschall-Isolierung mit entsprechender geringer dynamischen Steifigkeit des Lagers dominant ist. Die dafür erforderliche Frequenzentkopplung durch Schwingen der Membran mit ihrer Tilgermasse in Gegenphase zur Flüssigkeitsmasse in der Kammer 1 wird bei Anordnung einer einzigen Membran innerhalb der oberen Kammer nur für ein schmales Frequenzband erreicht, wofür Geometrie, Steifigkeit und Masse der Membran bzw. des Tilgers maßgebend sind. Wenn jetzt aber im Wirkungsbereich der motorseitigen Kammer eine weitere Membran mit oder ohne Tilgermasse unterschiedlicher Geometrie, Steifigkeit und Masse - unter entsprechender Abstimmung zu den Werten der ersten Membran - angeordnet wird, so ist dadurch eine erheblich breitbandigere Frequenzentkopplung möglich.

Da darüberhinaus auch die zweite Membran 16 rückseitig von einem Gasdruck der Membrankammer 17 beaufschlagt ist, wird dadurch gegen den Druck der Kammer 1 ein Gegendruck erzeugt, wodurch die Membran 16 weitgehend entlastet wird und somit eine größere Zeitstandsfestigkeit aufweist.

Eine weitere konstruktive Ausgestaltung ist in dem Längsschnitt nach Fig. 2 gezeigt. Hierbei ist die die obere Membrankammer 20 abschließende und eine kreisscheibenförmige Tilgermasse 21 allseitig umschließende Membran 22 von einem außenliegenden einvulkanisierten Spannring 23 gegen die Außenwandung der Membrankammer 20 verspannt.

Die Zwischenplatte 25 ist bei diesem Ausführungsbeispiel mehrteilig ausgeführt und soll im folgenden von innen nach außen beschrieben werden. Angrenzend an die eine Tilgermasse 26 umschließende Membran 27 ist ein zylindrischer Ring 28 aus gleichem Material wie die Membran 27 einstückig nach unten angesetzt, der somit ringförmig die eigentliche Membrankammer 29 umschließt. Von unten ist dann in den zylindrischen Raum 29, der von dem Ring 28 umschlossen wird, ein topfförmiges Bodenteil 30 aus Metall oder Kunststoff abdichtend eingesetzt, wodurch sich die jetzt allseitig abgeschlossene Membrankammer 29 ergibt.

Am Außenumfang des Ringes 28 ist ein im Querschnitt angenähert U-förmiger metallischer Ring 31 anvulkanisiert, der mit seinen nach außen ragenden freien Schenkeln das ringförmige Zwischenplattenteil 32 mit der wendelförmigen Verbindungsleitung 33 abdichtend umschließt. Im einzelnen weist dabei dieses Zwischenplattenteil 32 auf seiner Innenseite eine nach innen offene ein- oder mehrgängige wendelförmige Nut 33 auf, die über einen Durchtrittskanal 34 mit der motorseitigen Kammer 1 und einer Verbindungsleitung 35 mit der unteren Flüssigkeitskammer 2 in Verbindung stehen. Zwischenplattenteil 32, untere Kammerwandung 11 sowie ein zusätzliches topfförmig ausgebildetes metallische Bodenteil 36 sind auch hierbei ebenfalls durch das am unteren Ende umgebördelte Widerlager 37 abdichtend gegeneinander verspannt.

Das Motorlager dieses Ausführungsbeispiels nach Fig. 2 arbeitet nach dem gleichen Prinzip wie das in Fig. 1 dargestellte und bewirkt somit ebenfalls eine breitbandigere Frequenzentkopplung.

## Patentansprüche

1. Zweikammer-Motorlager mit hydraulischer Dämpfung, insbesondere für Kraftfahrzeuge, dessen flüssigkeitsgefüllte und gummielastische Umfangswände aufweisenden Kammern über eine eine Zwischenplatte durchsetzende Leitung miteinander in Verbindung stehen und in dessen stirnseitige Motorlagerplatte eine mit einer Membran abgeschlossene Membrankammer eingelassen ist, dadurch gekennzeichnet, daß die Zwischenplatte (3; 25) eine weitere, zentrale Membrankammer (17; 29) mit einer zur motorseitigen Kammer (1) hin abschließenden Membran (16; 27) aufweist, und die Membrankammer (17; 29) mit einem Gas gefüllt ist.

2. Zweikammer-Motorlager nach Anspruch 1, dadurch gekennzeichnet, daß die Zwichenplatte (3) auf ihrer Oberseite eine zylindrische Ausnehmung (17) aufweist, deren offene Seite mit einer mit dem Rand der Ausnehmung (17) abdichtend verbundenen Membran (16) abgeschlossen ist.

3. Zweikammer-Motorlager nach Anspruch 2, dadurch gekennzeichnet, daß die Membran (16) an ihrem Außenumfang einen anvulkanisierten zylindrischen Metallring (29) aufweist, der als Spannring in die zylindrische Ausnehmung (17) der Zwischenplatte (3) eingesetzt ist.

4. Zweikammer-Motorlager nach Anspruch 1, dadurch gekennzeichnet, daß die Membrankammer (29) auf der Oberseite von der Membran (27) seitlich von einem mit der Membran (27) einstückig ausgebildeten, angenähert hohlzylindrischen und nach unten angesetzten Ring (28) und auf der Unterseite von einem in den hohlzylindrischen Ring (28) eingesetzten, topfförmigen Bodenteil (30) aus starrem Material begrenzt ist und daß der Ring (28) auf seiner Außenseite an einem die Verbindungsleitung (33) zwischen den beiden Kammern (1; 2) aufnehmenden ringförmigen Zwischenplattenteil (32) anliegt.

5. Zweikammer-Motorlager nach Anspruch 4, dadurch gekennzeichnet, daß der hohlzylindrische Ring (28) auf seine Außenseite mit einem im Querschnitt angenähert U-förmigen, metallischem Ring (31) verbunden ist, dessen freie, nach außen ragende Schenkel das ringförmige Zwischenplattenteil (32) mit den nach innen offenen Nuten (33) der Verbindungsleitung abdichtend umschließen.

6. Zweikammer-Motorlager nach Anspruch 2 oder 4, dadurch gekennzeichnet, daß die Membran (17; 27) eine zentrale Tilgermasse (18; 27) aus starrem Material umschließt.

## Claims

1. Two-chamber engine mount with hydraulic damping, in particular for motor vehicles, in which the liquid filled chambers which have rubbery elastic outer walls communicate by way of a conduit extending through an intermediate plate and in which a membrane chamber closed by a membrane is fitted into the engine mounting plate at the end face of the mount, characterised in that the intermediate plate (3; 25) has another, central membrane chamber (17; 29) closed by a membrane (16; 27) separating it from the chamber (1) on the side facing the engine and in that the membrane chamber (17; 29) is filled with a gas.

2. Two-chamber engine mount according to claim 1, characterised in that the intermediate plate (3) has a cylindrical recess (17) on its upper surface, the open side of which recess (17) is closed by a membrane (16) which is sealed tightly to the edge of the recess (17).

3. Two-chamber engine mount according to claim 2, characterised in that the membrane (16) carries on its external circumference a cylindrical metal ring (19) which has been sealed to it by vulcanization and which is inserted as clamping ring in the cylindrical recess (17) of the intermediate plate (3).

4. Two chamber engine mount according to claim 1, characterised in that the membrane chamber (29) is bounded at the top by the membrane (27), laterally by an approximately hollow cylindrical ring (28) which is formed in one piece with the membrane (27) and extends downwards, and at the bottom by a cup-shaped base (30) of rigid material inserted in the hollow cylindrical ring (28), and in that the ring (28) bears by its external surface against an annular intermediate plate part (32) which contains the connecting conduit (33) between the two chambers (1; 2).

5. Two-chamber engine mount according to claim 4, characterised in that the hollow cylindrical ring (28) is attached on its external surface to a metal ring (31) which is approximately U-shaped in cross-section and the free, outwardly extending arms of which embrace and are tightly sealed to the annular intermediate plate part (32) containing the grooves (33) of the connecting conduit which are open to the interior.

6. Two-chamber engine mount according to claim 2 or 4, characterised in that the membrane (16; 27) encloses a central absorbing mass (18; 26) of rigid material.

## Revendications

1. Support à deux chambres pour moteur à amortissement hydraulique, notamment pour des véhicules automobiles, dans lequel des chambres remplies par un liquide et possédant des parois circonférentielles présentant l'élasticité du caoutchouc sont reliées entre elles par l'intermédiaire d'un conduit traversant une plaque intercalaire et dans une plaque frontale duquel se trouve ménagée une chambre à membrane, fermée par une membrane, caractérisé par le fait que la plaque intercalaire (3; 25) comporte une autre chambre centrale a membrane (17; 29) possédant une membrane (16; 27) fermant cette chambre en direction de la chambre (1) située du côté du moteur, et que la chambre à membrane (17; 29) est remplie par un gaz.

2. Support pour moteur à deux chambres selon la revendication 1, caractérisé par le fait que la plaque intercalaire (3) comporte, dans sa face supérieure, un évidement cylindrique (17), dont le côté ouvert est fermé par une membrane (16) reliée d'une manière étanche au bord de l'évidement (17).

3. Support pour moteur à deux chambres suivant la revendication 2, caractérisé par le fait que la membrane (16) possède sur son pourtour extérieur un anneau métallique cylindrique (23) fixé par vulcanisation et inséré en tant qu'anneau de serrage dans l'évidement cylindrique (17) de la plaque intercalaire (3).

4. Support pour moteur à deux chambres suivant la revendication 1, caractérisé par le fait que la chambre à membrane (29) est limitée, sur sa face supérieure par la membrane (27), latéralement par un anneau (28) approximativement en forme de cylindre creux, formé d'un seul tenant avec la membrane (27) et faisant saillie vers le bas, et, sur sa face inférieure, par un élément de fond en forme de coupelle (30) inséré dans l'anneau en forme de cylindre creux (28) et réalisé en un matériau rigide, et que l'anneau (28) s'applique, au niveau de sa face extérieure contre une partie de forme annulaire (32) de la plaque intercalaire, logeant le conduit de liaison (33) entre les deux chambres (1; 2).

5. Support peur moteur à deux chambres suivant la revendication 4, caractérisé par le fait que l'anneau en forme de cylindre creux (28) est relié, sur son côté extérieur, à un anneau métallique (31), dont la section transversale est approximativement en forme de U et dont les branches libres, qui font saillie vers l'extérieur, entourent d'une manière étanche l'élément de forme annulaire (32) de la plaque intercalaire comportant les gorges (33), ouvertes vers l'intérieur, du conduit de liaison.

6. Support pour moteur à deux chambres suivant la revendication 2 ou 4, caractérisé par le fait que la membrane (17; 27) enserre une masse centrale d'amortissement (18; 27) réalisée en un matériau rigide.

_FIG.1

FIG.2